# EUROPEAN PATENT SPECIFICATION

(11) **EP 3 923 406 B1**
(45) Date of publication and mention of the grant of the patent: **20.05.2026**
(21) Application number: 21198984.3
(22) Date of filing: 24.09.2021
(51) Int. Cl.: H01M 50/477, H01M 50/528, H01M 50/533, H01M 50/538, H01M 50/54, H01M 50/55, H01M 50/566, H01M 50/474

(54) **BATTERY CELL, BATTERY, AND ELECTRIC DEVICE**
BATTERIEZELLE, BATTERIE UND ELEKTRISCHES GERÄT
ÉLÉMENT DE BATTERIE, BATTERIE ET DISPOSITIF ÉLECTRIQUE

(30) Priority: 16.12.2020 CN 202011499356
(43) Date of publication of application: 15.12.2021
(73) Proprietor: Ningde Amperex Technology Ltd., Ningde City, Fujian 352100 (CN)
(72) Inventor: FAN, Huiping, Ningde, 352100 (CN); YU, Shixi, Ningde, 352100 (CN); WANG, Huiqin, Ningde, 352100 (CN)
(74) Representative: Icosa

(56) References cited:
- JP-A- 2013 145 678
- JP-A- 2013 161 632
- US-A1- 2001 041 288
- US-A1- 2017 141 363

## Description

### TECHNICAL FIELD

This application relates to the technical field of tab welding protection, and in particular, to a battery cell, a battery, and an electric device.

### BACKGROUND

A battery generally includes an electrode assembly, tabs (including a positive tab and a negative tab), a tab lead, and a housing. The electrode assembly and a part of the tab are located in the housing. The housing is filled with an electrolytic solution. The tab is welded to the tab lead. The tab is bent when being welded. A rebound stress for restoring a natural shape is generated at a bend, and is prone to drive the burrs in a weld region to contact and pierce a fusion layer (such as a polypropylene (PP) layer) inside the housing. Consequently, an electrolytic solution corrodes the fusion layer of the housing. For a battery with a pouch-type battery cell, once the burrs pierce a soft housing, not only the electrolytic solution will leak, but also external substances such as air and vapor will enter the battery cell to corrode the battery cell and affect the performance and safety of the battery.

In the prior art, although an adhesive layer is disposed between the weld region and the housing to prevent the burrs from contacting and piercing an aluminum film of the housing, currently the adhesive layer is poorly designed in terms of attaching, and is prone to peel off under a rebound stress of the tab, thereby not only failing to reduce the risks of corrosion and electrolyte leakage, but also reducing efficiency because the operator needs to affix the adhesive layer again during a top-sealing step of the battery cell. If the operator is not careful enough, insulation tape of the adhesive layer will enter a top seal of the battery cell to cause corrosion and electrolyte leakage. Publications JP2013145678A, US2017/141363A1, US2001/041288A1 and JP2013161632A disclose battery cells with adhesive layers overlaying a weld region of the tab.

Evidently, how to prevent the burrs generated by welding of tabs from piercing the housing and leading to corrosion and electrolyte leakage is still one of the important problems to be solved urgently in the industry. Understandably, the foregoing description is intended to provide general background information but does not necessarily constitute the prior art.

### SUMMARY

In view of the foregoing situation, this application provides a battery cell, a battery, and an electric device to solve the problem of corrosion and electrolyte leakage that occurs when burrs in a weld region of tabs pierce a housing. The invention is defined in appended claim 1.

The present invention provides a battery cell. The battery cell includes an electrode assembly, a tab, a tab lead, and an adhesive layer. The electrode assembly includes a first surface, lateral faces, and a second surface that are connected in tandem. In a thickness direction of the electrode assembly, the first surface is disposed opposite to the second surface. The tab is electrically connected to the electrode assembly and led out from a lateral face of the electrode assembly. The tab lead is connected to the tab by welding to form a weld region. One end of the adhesive layer is disposed on the first surface of the electrode assembly, and the other end of the adhesive layer is disposed on the second surface of the electrode assembly. The adhesive layer fully overlays the weld region.

According to the invention, the tab includes a first tab and a second tab. The tab lead includes a first tab lead and a second tab lead. The first tab lead is connected to the first tab by welding to form a first weld region, and the second tab lead is connected to the second tab by welding to form a second weld region. The adhesive layer includes a first adhesive layer configured to overlay the first weld region and a second adhesive layer configured to overlay the second weld region.

According to the invention, a notch is disposed on the first adhesive layer and the second adhesive layer separately to allow for leading out the first tab lead and the second tab lead.

According to the invention, the first adhesive layer and the second adhesive layer each include a first part, a second part, a third part, and a fourth part that are connected in tandem. The first part is disposed on the first surface. Both the second part and the third part are disposed in alignment with the lateral face, and the fourth part is disposed on the second surface. The second part is configured to overlay the first weld region. The notch is disposed in the third part.

In some embodiments, a width of the first tab lead is WO, a width of the notch is W1, and 2 mm ≤ W1 - WO ≤ 6 mm.

In some embodiments, a length of the second part is greater than a length of the first weld region. In the thickness direction of the electrode assembly, a width of the second part is greater than a height of the first weld region.

In some embodiments, the notch is disposed in the fourth part.

In some embodiments, the first adhesive layer and the second adhesive layer are connected as a whole; or the first adhesive layer does not overlap the second adhesive layer.

In some embodiments, a thickness of the adhesive layer is 0.01mm-0.05mm.

In some embodiments, 2 mm ≤ W3 ≤ D3 - k2, W3 is a width of a portion of the second adhesive layer located between the first tab lead and the second tab lead, D3 is a distance between the first tab lead and the second tab lead, k2 is 2mm - 4mm.

In some embodiments, D3 > (W2+W3), D3 is a distance between the first tab lead and the second tab lead, W2 is a width of a portion of the first adhesive layer located between the first tab lead and the second tab lead, W3 is a width of a portion of the second adhesive layer located between the first tab lead and the second tab lead.

A second aspect of the embodiments of this application provides a battery, including a housing and any of the battery cells described above. The battery cell is disposed in the housing.

A third aspect of the embodiments of this application provides an electric device, including the battery described above.

In the battery cell, the battery, and the electric device according to the embodiments of this application, the adhesive layer in the battery cell fully overlays a weld region of the tab and the tab lead, and the two ends of the adhesive layer are disposed on two opposite surfaces of the electrode assembly respectively. The area of fixation between the adhesive layer and the electrode assembly is relatively large, and the adhesive layer is highly adhesive and not prone to peel off, and cancels the rebound stress at the bend of the tab, thereby helping to prevent the burrs in the weld region from contacting and piercing a fusion layer of the housing of the battery, reducing the risks of corrosion and electrolyte leakage, and ensuring safety of the battery cell, the battery, and the electric device.

### BRIEF DESCRIPTION OF DRAWINGS

FIG. 1 is a schematic structural diagram of a battery according to an embodiment of this application;
FIG. 2 is a schematic structural diagram of an adhesive layer according to a first embodiment of this application;
FIG. 3, FIG. 4, and FIG. 5 are schematic structural diagrams of a battery cell that uses the adhesive layer shown in FIG. 2 from different viewing angles;
FIG. 6 is a schematic structural diagram of an adhesive layer according to a second embodiment of this application;
FIG. 7, FIG. 8, and FIG. 9 are schematic structural diagrams of a battery cell that uses the adhesive layer shown in FIG. 6 from different viewing angles;
FIG. 10 is a schematic structural diagram of an adhesive layer according to a third embodiment of this application;
FIG. 11, FIG. 12, and FIG. 13 are schematic structural diagrams of a battery cell that uses the adhesive layer shown in FIG. 10 from different viewing angles;
FIG. 14 is a schematic structural diagram of an adhesive layer according to a fourth embodiment of this application; and
FIG. 15, FIG. 16, and FIG. 17 are schematic structural diagrams of a battery cell that uses the adhesive layer shown in FIG. 14 from different viewing angles.

### DETAILED DESCRIPTION

To make the objectives, technical solutions, and advantages of this application clearer, the following describes the technical solutions of this application clearly and thoroughly with reference to specific embodiments and drawings. Evidently, the described embodiments are just a part of but not all of this application. Based on the description of this application, the following embodiments and the technical features in each embodiment may be combined with each other as long as no conflict occurs.

Understandably, in the context of this application, a direction or a positional relationship indicated by the terms such as "center", "longitudinal", "transverse", "length", "width", "thickness", "upper", "lower", "before", "after", "left", "right", "vertical", "horizontal", "top", "bottom", "inner", "outer", "clockwise", and "counterclockwise" is a direction or positional relationship based on the illustration in the drawings, and is merely intended for ease of describing the technical solutions in the corresponding embodiment of this application and for brevity of description, but not intended to indicate or imply that the indicated device or component must be located in the specified direction or constructed or operated in the specified direction. Therefore, such terms are not to be understood as a limitation on this application.

Considering that in existing structures of a battery cell, a rebound stress is generated by bending when a tab is welded to a tab lead, and is prone to drive burrs in a weld region to contact and pierce a housing (an internal fusion layer), thereby resulting in risks of corrosion and electrolyte leakage. An adhesive layer in a battery cell according to embodiments of this application fully overlays the weld region, and two ends of the adhesive layer are disposed on two opposite surfaces of the electrode assembly respectively. The probability of contact between the burrs and the housing is reduced by increasing the area of fixation between the adhesive layer and the electrode assembly and enhancing stability of the bonding of the adhesive layer.

### First Embodiment

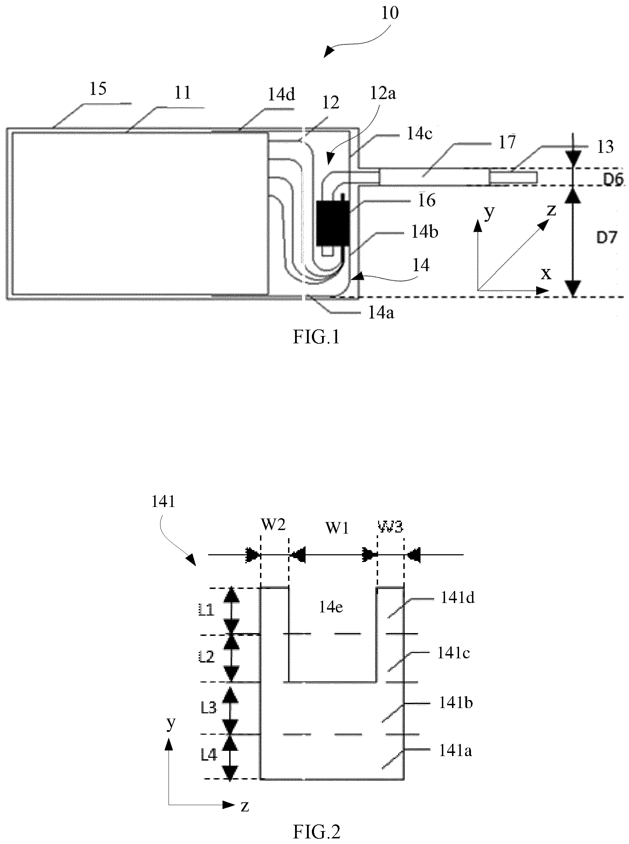

Referring to FIG. 1 to FIG. 5, a battery cell is disposed in a housing 15 of a battery 10. The battery cell includes an electrode assembly 11, a tab 12, a tab lead 13, and an adhesive layer 14.

Understandably, the battery 10 may further include other components, details of which may be obtained from the prior art and are omitted herein.

The electrode assembly 11 includes a first surface, lateral faces, and a second surface that are connected in tandem. In a thickness direction of the electrode assembly 11, the first surface is disposed opposite to the second surface.

In an implementation, for example, in a placement orientation shown in FIG. 1, the thickness direction of the electrode assembly 11 is a second direction y, a bottom face of the electrode assembly 11 is the first surface, a top face of the electrode assembly 11 is the second surface, and a right lateral face of the electrode assembly 11 is a lateral face that connects the first surface and the second surface. Understandably, depending on the placement orientation of the battery 10, the orientation of the first surface, the lateral face, and the second surface varies.

The electrode assembly 11 may be formed by winding or stacking a plurality of electrode plates. The electrode plates are arranged in layers and led out from the lateral face of the electrode assembly 11. The ends of the electrode plates converge to form the tab 12. In this way, the tab 12 is electrically connected to the electrode assembly 11. In the implementation shown in FIG. 1, on the right lateral face of the electrode assembly 11, the tab 12 may be bent into a U shape, and contains a cannelure 12a.

One end of the tab lead 13 is connected to the tab 12 by welding to form a weld region 16. The other end may be led out from housing 15 of the battery 10 to form an electrode of the battery 10.

In the implementation shown in FIG. 1, the tab lead 13 may be L-shaped, and includes a main body and an extension portion. The main body extends along a first direction x, and the extension portion extends from one end of the main body into the cannelure 12a. In the first direction x, the extension portion of the tab lead 13 partly overlaps the tab 12. In the overlap region, the tab lead 13 is welded to the tab 12. Along the first direction x, an orthographic projection of the weld region 16 of the tab lead and the tab may fall into the overlap region, so as to ensure the firmness of the welding of the tab lead 13 and the tab 12 and the stability of the electrical connection between the tab lead and the tab.

One end of the adhesive layer 14 is disposed on (for example, bonded to) the first surface of the electrode assembly 11. The other end of the adhesive layer 14 is disposed on (for example, bonded to) the second surface of the electrode assembly 11. The adhesive layer 14 fully overlays the weld region 16 of the tab lead 13 and the tab 12.

According to a general design in which the battery 10 is of positive and negative polarities, the tab 12 includes a first tab and a second tab, which are a positive tab and a negative tab, respectively. Accordingly, the tab lead 13 includes a first tab lead 131 and a second tab lead 132, which are a positive tab lead and a negative tab lead, respectively. The first tab lead 131 is welded to the first tab to form a first weld region, and the second tab lead 132 is welded to the second tab to form a second weld region. The adhesive layer 14 includes a first adhesive layer 141 and a second adhesive layer 142. The first adhesive layer 141 is configured to overlay the first weld region, and the second adhesive layer 142 is configured to overlay the second weld region.

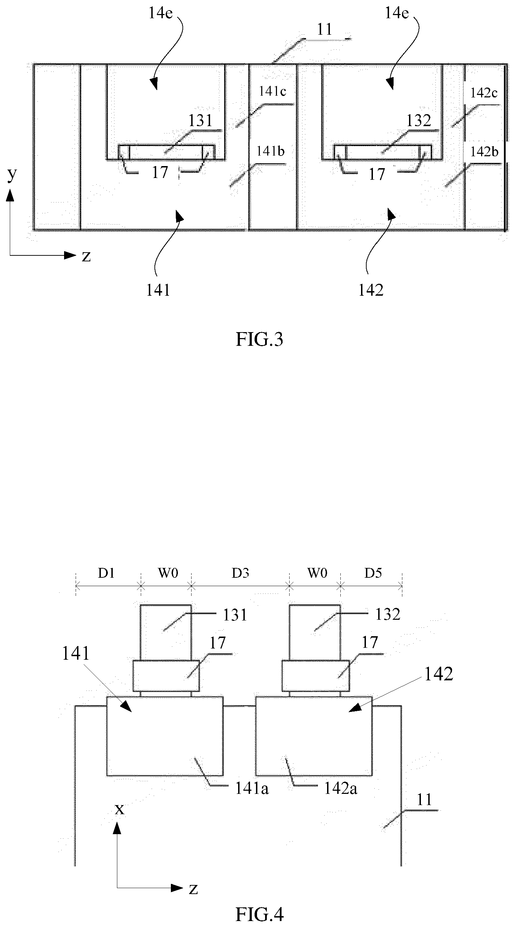

The first adhesive layer 141 and the second adhesive layer 142 may be identical in structure and shape. For example, both are a sheet-like structure containing a notch 14e, and are in a hollow U shape on the whole. The first adhesive layer 141 is shown in FIG. 2, and the structure of the second adhesive layer 142 is the same as the first adhesive layer 141 in FIGS. 3 to 5. The notch 14e of the first adhesive layer 141 allows for leading out the first tab lead 131, and the notch 14e of the second adhesive layer 142 allows for leading out the second tab lead 132.

The first adhesive layer 141 includes a first part 141a, a second part 141b, a third part 141c, and a fourth part 141d that are connected in tandem. A notch is disposed in both the third part 141c and the fourth part 141d. Both of the notches communicate to form a notch 14e of the first adhesive layer 141. When the first adhesive layer 141 is bonded to the electrode assembly 11, the first tab lead 131 is led out from the notch 14e of the first adhesive layer 141. The first part 141a is bonded to the bottom face of the electrode assembly 11. The fourth part 141d is bonded to the top face of the electrode assembly 11. Both the second part 141b and the third part 141c are disposed in alignment with the lateral face of the electrode assembly 11. This is equivalent to that the second part 141b and the third part 141c overlay the lateral face of the electrode assembly 11. The second part 141b is configured to overlay the first weld region 16.

The second adhesive layer 142 includes a first part 142a, a second part 142b, a third part 142c, and a fourth part 142d that are connected in tandem. A notch is disposed in both the third part 142c and the fourth part 142d. Both of the notches communicate to form a notch 14e of the second adhesive layer 142. When the second adhesive layer 142 is bonded to the electrode assembly 11, the second tab lead 132 is led out from the notch 14e of the second adhesive layer 142. The first part 142a is bonded to the bottom face of the electrode assembly 11. The fourth part 142d is bonded to the top face of the electrode assembly 11. Both the second part 142b and the third part 142c are disposed in alignment with the lateral face of the electrode assembly 11. This may be deemed that the second part 142b and the third part 142c overlay the lateral face of the electrode assembly 11. The second part 142b is configured to overlay the second weld region 16.

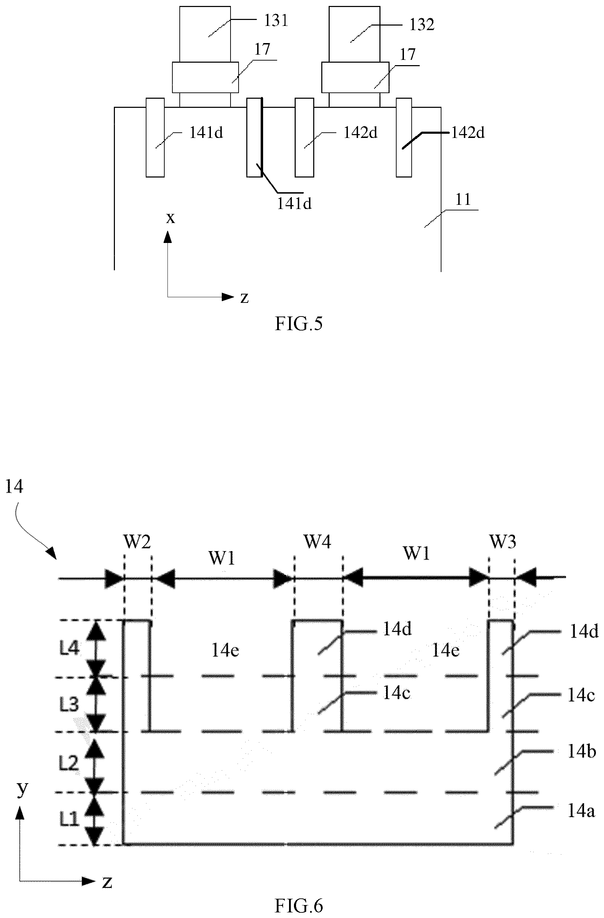

As shown in FIG. 3 and FIG. 5, the first adhesive layer 141 and the second adhesive layer 142 are spaced apart between the first tab lead 131 and the second tab lead 132, that is, the two adhesive layers 14 do not overlap.

Internal components of the battery 10, such as the electrode assembly 11, the tab 12, the tab lead 13, and the adhesive layer 14, are disposed inside a cavity defined by the housing 15. The housing 15 serves to protect the components in the battery 10 to ensure safety of the battery 10.

The cavity of the housing 15 is filled with an electrolytic solution. A part of the main body of the first tab lead 131 and the second tab lead 132 is exposed. An outer surface of the exposed part may be partly sealed and wrapped with a sealing layer 17. The sealing layer is configured to prevent external substances such as moisture and oxygen from entering the battery 10 through a joint between the first tab lead 131 or the second tab lead 132 and the housing 15, and avoid leaking the internal electrolytic solution from the joint between the first tab lead 131 or the second tab lead 132 and the housing 15.

The sealing layer 17 may be made of a material with high sealing performance, such as a waterproof antioxidation material. In an implementation, the material of the sealing layer 17 may be an adhesive (for example, an electrode adhesive) or resin.

As can be seen from above, the adhesive layer 14 overlays the weld region 16 of the tab 12 and the tab lead 13, and the two opposite ends of the adhesive layer 14 are disposed on two opposite surfaces of the electrode assembly 11 respectively. The area of fixation between the adhesive layer 14 and the electrode assembly 11 is relatively large, and the adhesive layer is highly adhesive and not prone to peel off, and cancels the rebound stress at the bend of the tab 12, thereby helping to prevent the burrs in the weld region 16 from contacting and piercing the housing 15 of the battery (or a fusion layer of the housing 15, such as a PP layer), reducing the risks of corrosion and electrolyte leakage, and ensuring safety of the battery 10. In addition, the adhesive layer 14 is not prone to be peel off. This makes it unnecessary to bond the adhesive layer 14 again during a top-sealing step of the battery cell and avoids rework, and helps to ensure high top-sealing efficiency of the battery cell.

Understandably, the thickness of the adhesive layer 14 and the size of each part also affect the bonding strength between the adhesive layer 14 and the electrode assembly 11 to some extent. Therefore, the thickness of the adhesive layer 14 and the size of each part are further described exemplarily below in this embodiment.

If the adhesive layer 14 is too thick, the space between the top and bottom faces of the electrode assembly 11 and the housing 15 will increase, and the overall thickness of the battery cell will increase. If the adhesive layer 14 is too thin, the adhesive layer is prone to be pierced by the burrs of the weld region 16 and cannot effectively prevent the burrs from contacting and piercing an aluminum film of the housing 15. Therefore, the thickness of the adhesive layer 14 may fall between 0.010 and 0.050 millimeters (mm).

Referring to FIG. 1 to FIG. 5, a distance D3 between the first tab lead 131 and the second tab lead 132 is greater than a total width of the portions that are of the first adhesive layer 141 and the second adhesive layer 142 and located between the two tab leads 13, that is, D3 > (W2 + W3). W2 is a width of a portion of the first adhesive layer 141 located between the first tab lead 131 and the second tab lead 132. W3 is a width of a portion of the second adhesive layer 142 located between the first tab lead 131 and the second tab lead 132.

For any adhesive layer 14, in a third direction z, the length (W1+W2+W3) of the adhesive layer 14 is greater than the length of a corresponding weld region 16. In the thickness direction of the electrode assembly 11, that is, in the second direction y, the width L2 of the second part 141b of the first adhesive layer 141 is greater than the height of the corresponding weld region 16. The first direction x, the second direction y, and the third direction z are positive directions of three coordinate axes of a three-dimensional rectangular coordinate system.

The length of the adhesive layer 14 may be set adaptively according to the electrode assembly 11. For example, 2 mm ≤ W2 ≤ D1, where D1 is the distance between the first tab lead 131 and a nearest edge of the electrode assembly 11. Similarly, 2 mm ≤ W3 ≤ D5, where D5 is the distance between the second tab lead 132 and a nearest edge of the electrode assembly 11. The width W1 of the notch 14e is determined according to the width of the tab lead 13. W1 may be slightly wider than the width of a corresponding tab lead 13. For example, W1 = WO + k1, where the value range of k1 falls between 2 mm and 6 mm, that is, 2 mm ≤ W1 - WO ≤ 6 mm. W3 is less than D3. For example, 2 mm ≤ W3 ≤ D3 - k2, and the value range of k2 falls between 2 mm and 4 mm.

The width L4 of the fourth part 141d of the first adhesive layer 141 may be identical to the width L1 of the first part 141a. That is, L1 is equal to L4, whose value falls between 5 mm and 15 mm, for example. If the widths L1 and L4 are too small, it is difficult to bond the adhesive layer to the electrode assembly 11 effectively. If the widths L1 and L4 are too large, it is difficult to operate, the adhesive layer 14 is likely to wrinkle, or the operating efficiency of the production line is lower. If the adhesive layer 14 is of a low viscosity, the values of the widths L1 and L4 may be 20 mm to 30 mm.

When the adhesive layer 14 is bonded to the electrode assembly 11, the sum (L2+L3) of the widths of the second part 141b and the third part 141c of any adhesive layer 14 (for example as the first adhesive layer 141) is equal to the thickness of the electrode assembly 11. In addition, the width L3 of the third part 141c may be equal to the height D7 of a corresponding weld region 16.

### Second Embodiment

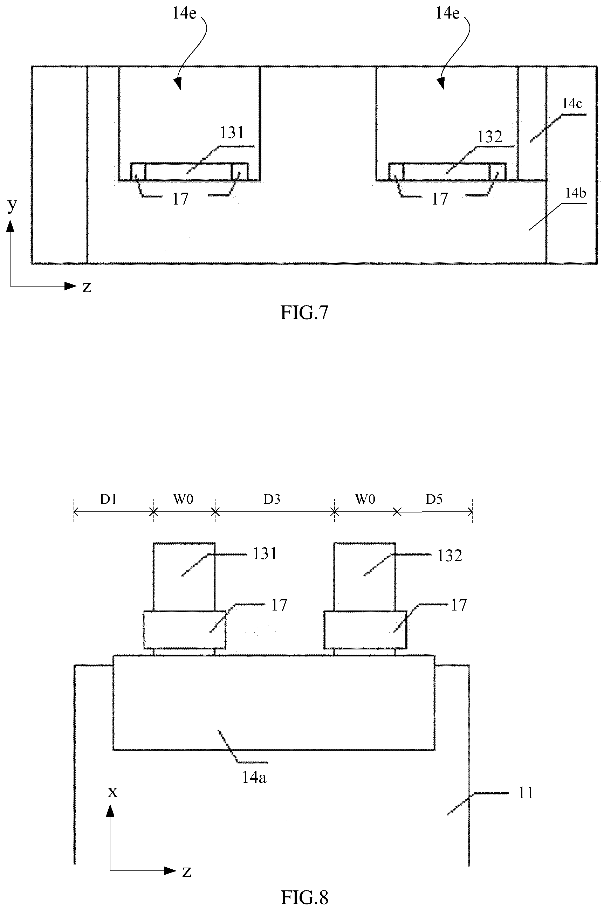

The components with the same name are marked with the same reference numerals in different embodiments of this application. On the basis of but different from those described in the first embodiment, referring to FIG. 1 and FIG. 6 to FIG. 9, the battery cell in this embodiment uses just one adhesive layer 14. The adhesive layer contains two notches 14e that are in a W-shaped structure. This is equivalent to an effect that the first adhesive layer 141 and the second adhesive layer 142 are connected as a whole. Referring to FIG. 6 to FIG. 9, The first part 141a of the first adhesive layer 141 and the first part 142a of the second adhesive layer 142 are connected to form the first part 14a of the adhesive layer 14; the second part 141b of the first adhesive layer 141 and the second part 142b of the second adhesive layer 142 is connected to form the second part 14b of the adhesive layer 14; the third part 141c of the first adhesive layer 141 and the third part 142c of the second adhesive layer 142 are connected to form the third part 14c of the adhesive layer 14; and the fourth part 141d of the adhesive layer 141 and the fourth part 142d of the second adhesive layer 142 are connected as a whole to form the fourth part 14d of the adhesive layer 14.

The distance D3 between the first tab lead 131 and the second tab lead 132 is greater than the distance W4 between the two notches 14e of the adhesive layer 14, that is, D3 > W4.

In this embodiment, by using just one adhesive layer 14, the beneficial effects of the first embodiment can be achieved, and the affixing process is simpler than the process of affixing two adhesive layers 14. In addition, the coverage area of the adhesive layer 14 between the first tab lead 131 and the second tab lead 132 is increased, thereby helping to ensure effective coverage of the first weld region 16 and the second weld region 16.

### Third Embodiment

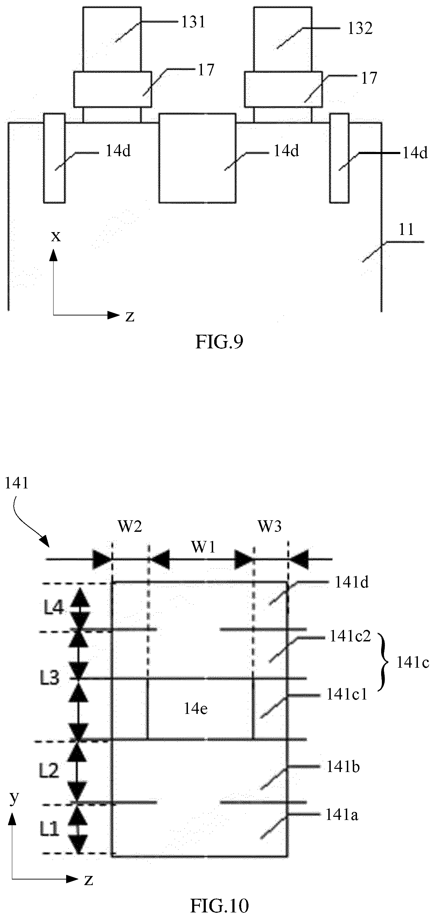

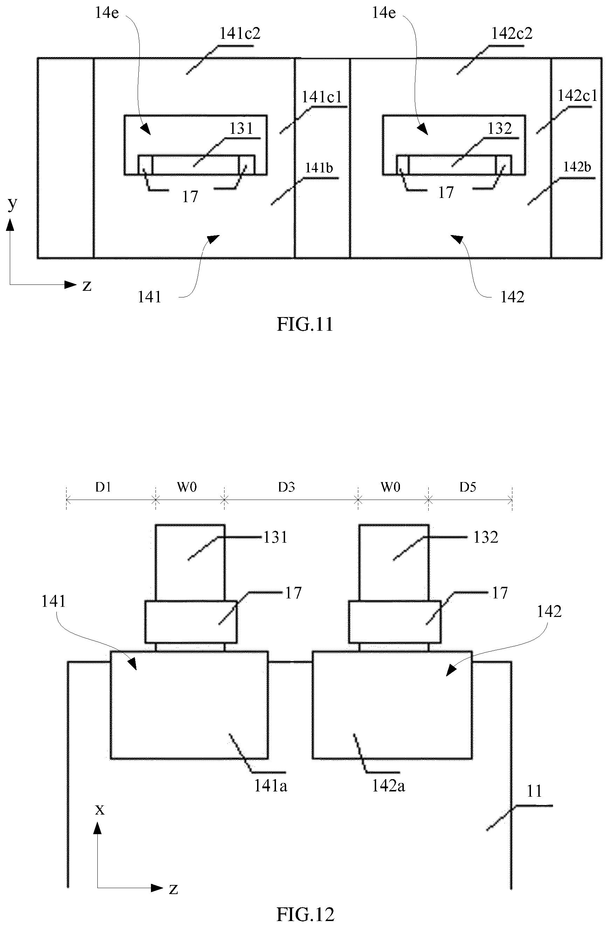

On the basis of but different from those described in the first embodiment, referring to FIG. 1, and FIG. 10 to FIG. 13, the battery cell in this embodiment uses two adhesive layers 14. Each adhesive layer is in a concentric square-shaped structure. The two adhesive layers 14 do not overlap. The first adhesive layer 141 is shown in FIG. 10, and the structure of the second adhesive layer 142 is the same as the first adhesive layer 141 in FIGS. 11 to 13.

The two adhesive layers 14 may be exactly identical in structure and shape. For any adhesive layer 14, for example as the first adhesive layer 141, the third part 141c includes two regions. One region 141c1 is connected to the second part 141b, and a notch 14e is made in the region. The other region 141c2 is connected to the fourth part 141b, but no notch 14e is made in the region. No notch is made in the fourth part 141b either.

In the thickness direction of the electrode assembly 11 (that is, in the second direction y), the width of one region 141c1 is slightly greater than the height of a corresponding tab lead 13.

On the basis of implementing the first embodiment and achieving the beneficial effects of the first embodiment, in this embodiment, no notch is made on the fourth part 141b or a part (that is, the region 141c2) of the third part 141c of any adhesive layer 14, so as to increase the bonding area between the adhesive layer 14 and the electrode assembly 11, enhance the adhesion force, and prevent peeling off.

### Fourth Embodiment

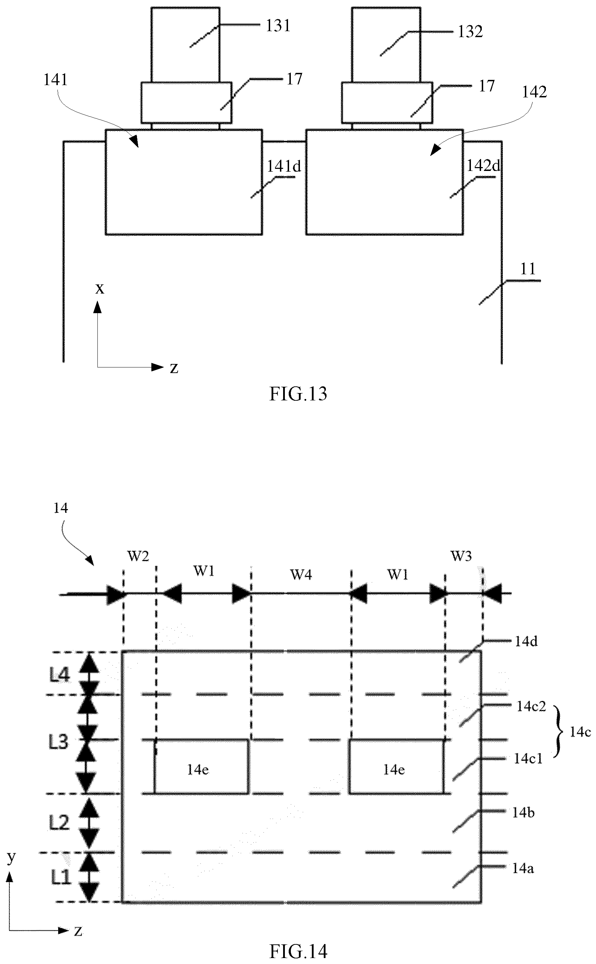

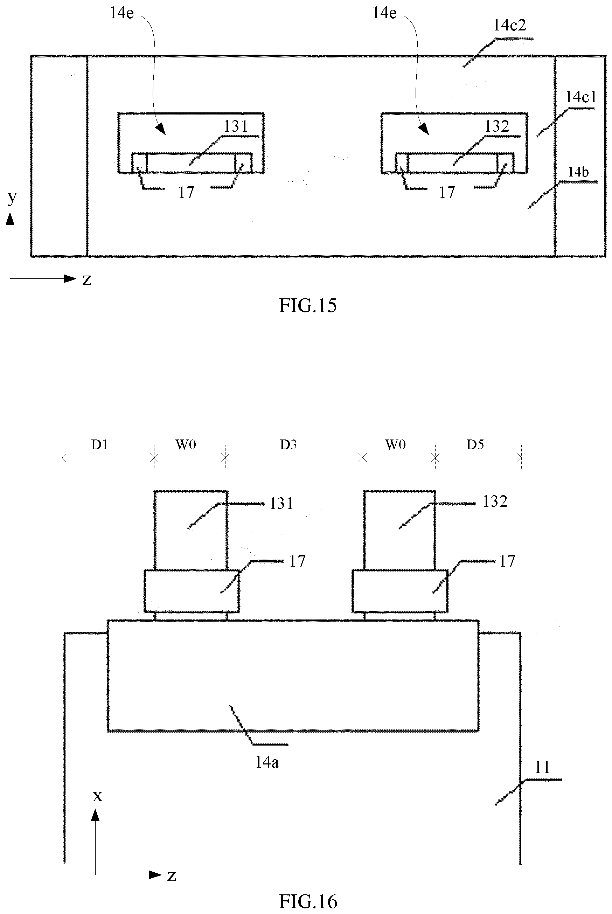

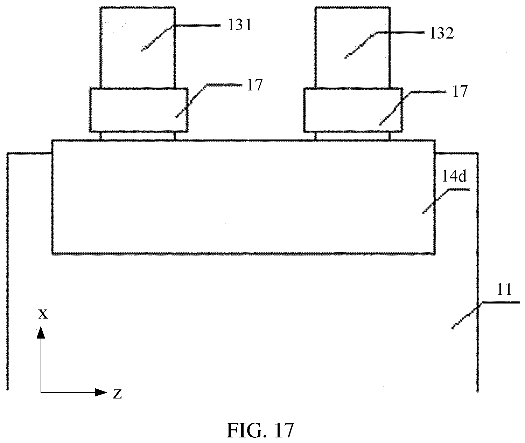

On the basis of but different from those described in the third embodiment, referring to FIG. 1 and FIG. 14 to FIG. 17, the battery cell in this embodiment uses one adhesive layer 14. The adhesive layer contains two notches 14e that are parallel-connected in a concentric square-shaped structure. This is equivalent to an effect that the first adhesive layer 141 and the second adhesive layer 142 in the third embodiment are connected as a whole. Referring to FIG. 14 to FIG. 17, The first part 141a of the first adhesive layer 141 and the first part 142a of the second adhesive layer 142 are connected to form the first part 14a of the adhesive layer 14; the second part 141b of the first adhesive layer 141 and the second part 142b of the second adhesive layer 142 is connected to form the second part 14b of the adhesive layer 14; the third part 141c of the first adhesive layer 141 and the third part 142c of the second adhesive layer 142 are connected to form the third part 14c of the adhesive layer 14; and the fourth part 141d of the adhesive layer 141 and the fourth part 142d of the second adhesive layer 142 are connected as a whole to form the fourth part 14d of the adhesive layer 14.

The distance D3 between the first tab lead 131 and the second tab lead 132 is greater than the distance W4 between the two notches 14e of the adhesive layer 14, that is, D3 > W4.

In this embodiment, by using just one adhesive layer 14, the beneficial effects of the third embodiment can be achieved, and the affixing process is simpler than the process of affixing two adhesive layers 14. In addition, the coverage area of the adhesive layer 14 between the first tab lead 131 and the second tab lead 132 is increased, thereby helping to ensure effective coverage of the first weld region 16 and the second weld region 16.

An embodiment of this application further provides a battery. The battery may contain the battery cell according to any of the foregoing embodiments, for example, the battery 10 shown in FIG. 1. The battery cell is disposed in a housing of the battery. The battery can achieve the beneficial effects of the battery cell according to the corresponding embodiment.

Another embodiment of this application provides an electric device. The electric device includes the battery 10 according to any of the foregoing embodiments. The electric device may be implemented in various specific forms. For example, in actual application scenarios, the electric device includes, but is not limited to, electronic products such as a mobile communications product, an electric vehicle, an electric bicycle, an electric navigation tool, and an unmanned aerial vehicle.

A person skilled in the art understands that the structures according to the embodiments of this application are not only applicable to the components specially designed for mobile purposes, but also applicable to fixed-type electric devices.

Because the electric device contains the battery 10 according to any of the foregoing embodiments, the electric device can achieve the beneficial effects of the battery 10 according to the corresponding embodiment.

The foregoing descriptions are merely a part of the embodiments of this application, and are not intended to limit the patent scope of this application.

Unless otherwise defined in the context, reference to a process, method, object, or device that "includes" or "comprises" a specific number of elements does not rule out a possibility that the process, method, object, or device further includes other equivalent elements. In addition, parts, features, and elements with the same name in different embodiments may have the same meaning or different meanings. The specific meanings of the parts, features, and elements need to be determined according to the interpretation thereof provided in a specific embodiment or further determined with reference to the context in the specific embodiment.

In addition, although the terms such as "first, second, third" are used herein to describe various information, the information is not limited by the terms. Such terms are merely used to distinguish between different types information. A noun in the singular form preceded by "a", "an", "the" herein is intended to include the plural form thereof. The terms "or" and "and/or" are interpreted as inclusive, or mean any one or any combination of the items enumerated. No exception of the foregoing definitions occurs unless the combinations of components, functions, steps, or operations are inherently mutually exclusive in some way.

## Claims

1. A battery cell (10), comprising:
an electrode assembly (11) comprising a first surface, lateral faces, and a second surface connected in series in a thickness direction of the electrode assembly (11), the first surface is disposed opposite to the second surface;
a tab (12) electrically connected to the electrode assembly (11) and led out from one of the lateral faces;
a tab lead (13) connected to the tab (12) by welding to form a weld region (16);
an adhesive layer (14), one end of the adhesive layer (14) is disposed on the first surface, the other end of the adhesive layer (14) is disposed on the second surface, and the adhesive layer (14) fully overlays the weld region (16);
wherein the tab (12) comprises a first tab and a second tab, the tab lead (13) comprises a first tab lead (131) and a second tab lead (132), the first tab lead (131) is connected to the first tab by welding to form a first weld region, the second tab lead (132) is connected to the second tab by welding to form a second weld region, and the adhesive layer (14) comprises a first adhesive layer (141) configured to overlay the first weld region and a second adhesive layer configured to overlay the second weld region;
wherein a notch (14e) is disposed on the first adhesive layer (141) and the second adhesive layer (142) separately to allow for leading out the first tab lead (131) and the second tab lead (132);
**characterized in that**, the first adhesive layer (141) comprises a first part (141a), a second part (141b), a third part (141c), and a fourth part (141d) connected in series, the first part (141a) is disposed on the first surface, both the second part (141b) and the third part (141c) are disposed in alignment with the lateral face from which the tab is led out, the fourth part (141d) is disposed on the second surface, the second part (141b) is configured to overlay the first weld region, and the notch (14e) is disposed in the third part (141c),
wherein, in a direction z of the first adhesive layer (141), the notch (14e) is bordered on both sides by the third part (141c), wherein the direction z is perpendicular to the thickness direction and parallel to the plane of the lateral surface from which the tab is led out.

2. The battery cell (10) according to claim **1, characterized in that**, a width of the first tab lead (131) is W0, a width of the notch (14e) is W1, and 2 mm ≤ W1 - W0 ≤ 6 mm.

3. The battery cell (10) according to claim **1** or **2, characterized in that**, a length of the second part (141b) is greater than a length of the first weld region, and in the thickness direction of the electrode assembly (11), a width of the second part (141b) is greater than a height of the first weld region.

4. The battery cell (10) according to any one of claims **1** to **3, characterized in that**, the notch (14e) is disposed in the fourth part (141d).

5. The battery cell (10) according to any one of claims **1** to **4, characterized in that**, the first adhesive layer (141) and the second adhesive layer (142) are connected as a whole; or the first adhesive layer (141) does not overlap the second adhesive layer (142).

6. The battery cell (10) according to any one of claims **1** to **5, characterized in that**, a thickness of the adhesive layer is 0.01mm-0.05mm.

7. The battery cell (10) according to any one of claims **1** to **6, characterized in that**, 2 mm ≤ W3 ≤ D3 - k2, W3 is a width of a portion of the second adhesive layer (142) located between the first tab lead (131) and the second tab lead (132), D3 is a distance between the first tab lead (131) and the second tab lead (132), k2 is 2mm - 4mm.

8. The battery cell (10) according to any one of claims **1** to **6, characterized in that**, D3 > (W2+W3), D3 is a distance between the first tab lead (131) and the second tab lead (132), W2 is a width of a portion of the first adhesive layer (141) located between the first tab lead (131) and the second tab lead (132), W3 is a width of a portion of the second adhesive layer (142) located between the first tab lead (131) and the second tab lead (132).

9. A battery, comprising a housing and the battery cell (10) according to any one of claims **1** to **8, characterized in that**, the battery cell (10) is disposed in the housing.

10. An electric device, **characterized in that**, the electric device comprises the battery according to claim **9.**

## Patentansprüche

1. Batteriezelle (10), umfassend:
eine Elektrodenbaugruppe (11), die eine erste Oberfläche, Seitenflächen und eine zweite Oberfläche umfasst, die in einer Dickenrichtung der Elektrodenbaugruppe (11) in Reihe verbunden sind, wobei die erste Oberfläche gegenüber der zweiten Oberfläche angeordnet ist;
eine Lasche (12), die elektrisch mit der Elektrodenbaugruppe (11) verbunden und von einer der Seitenflächen herausgeführt ist;
eine Laschenleitung (13), die durch Schweißen mit der Lasche (12) verbunden ist, um einen Schweißbereich (16) zu bilden;
eine Klebstoffschicht (14), ein Ende der Klebstoffschicht (14) auf der ersten Oberfläche angeordnet ist, das andere Ende der Klebstoffschicht (14) auf der zweiten Oberfläche angeordnet ist und die Klebstoffschicht (14) den Schweißbereich (16) vollständig überlagert;
wobei die Lasche (12) eine erste Lasche und eine zweite Lasche umfasst, die Laschenleitung (13) eine erste Laschenleitung (131) und eine zweite Laschenleitung (132) umfasst, die erste Laschenleitung (131) durch Schweißen mit der ersten Lasche verbunden ist, um einen ersten Schweißbereich zu bilden, die zweite Laschenleitung (132) durch Schweißen mit der zweiten Lasche verbunden ist, um einen zweiten Schweißbereich zu bilden, und die Klebstoffschicht (14) eine erste Klebstoffschicht (141), die so konfiguriert ist, dass sie den ersten Schweißbereich überlagert, und eine zweite Klebstoffschicht umfasst, die so konfiguriert ist, dass sie den zweiten Schweißbereich überlagert; wobei eine Kerbe (14e) an der ersten Klebstoffschicht (141) und der zweiten Klebstoffschicht (142) separat angeordnet ist, um das Herausführen der ersten Laschenleitung (131) und der zweiten Laschenleitung (132) zu ermöglichen;
**dadurch gekennzeichnet, dass** die erste Klebstoffschicht (141) einen ersten Teil (141a), einen zweiten Teil (141b), einen dritten Teil (141c) und einen vierten Teil (141d) umfasst, die in Reihe verbunden sind, wobei der erste Teil (141a) auf der ersten Oberfläche angeordnet ist, sowohl der zweite Teil (141b) als auch der dritte Teil (141c) in einer Linie mit der Seitenfläche angeordnet sind, aus der die Lasche herausgeführt wird, der vierte Teil (141d) auf der zweiten Oberfläche angeordnet ist, der zweite Teil (141b) so konfiguriert ist, dass er den ersten Schweißbereich überlagert, und die Kerbe (14e) im dritten Teil (141c) angeordnet ist,
wobei in einer Richtung z der ersten Klebstoffschicht (141) die Kerbe (14e) beidseitig durch den dritten Teil (141c) begrenzt wird, wobei die Richtung z senkrecht zur Dickenrichtung und parallel zur Ebene der Seitenfläche verläuft, aus der die Lasche herausgeführt wird.

2. Batteriezelle (10) nach Anspruch 1, **dadurch gekennzeichnet, dass** eine Breite der ersten Laschenleitung (131) W0 ist, eine Breite der Kerbe (14e) W1 ist, und 2 mm ≤ W1 - W0 ≤ 6 mm.

3. Batteriezelle (10) nach Anspruch 1 oder 2, **dadurch gekennzeichnet, dass** eine Länge des zweiten Teils (141b) größer ist als eine Länge des ersten Schweißbereichs, und in Dickenrichtung der Elektrodenbaugruppe (11) eine Breite des zweiten Teils (141b) größer ist als eine Höhe des ersten Schweißbereichs.

4. Batteriezelle (10) nach einem der Ansprüche 1 bis 3, **dadurch gekennzeichnet, dass** die Kerbe (14e) im vierten Teil (141d) angeordnet ist.

5. Batteriezelle (10) nach einem der Ansprüche 1 bis 4, **dadurch gekennzeichnet, dass** die erste Klebstoffschicht (141) und die zweite Klebstoffschicht (142) als Ganzes verbunden sind; oder die erste Klebstoffschicht (141) die zweite Klebstoffschicht (142) nicht überlappt.

6. Batteriezelle (10) nach einem der Ansprüche 1 bis 5, **dadurch gekennzeichnet, dass** eine Dicke der Klebstoffschicht 0,01 mm-0,05 mm beträgt.

7. Batteriezelle (10) nach einem der Ansprüche 1 bis 6, **dadurch gekennzeichnet, dass** 2 mm ≤ W3 ≤ D3 - k2, W3 eine Breite eines Abschnitts der zweiten Klebstoffschicht (142) ist, der sich zwischen der ersten Laschenleitung (131) und der zweiten Laschenleitung (132) befindet, D3 ein Abstand zwischen der ersten Laschenleitung (131) und der zweiten Laschenleitung (132) ist und k2 2 mm - 4 mm beträgt.

8. Batteriezelle (10) nach einem der Ansprüche 1 bis 6, **dadurch gekennzeichnet, dass** D3 >(W2+W3), D3 ein Abstand zwischen der ersten Laschenleitung (131) und der zweiten Laschenleitung (132) ist, W2 eine Breite eines Abschnitts der ersten Klebstoffschicht (141) ist, der sich zwischen der ersten Laschenleitung (131) und der zweiten Laschenleitung (132) befindet, W3 eine Breite eines Abschnitts der zweiten Klebstoffschicht (142) ist, die sich zwischen der ersten Laschenleitung (131) und der zweiten Laschenleitung (132) befindet.

9. Batterie, umfassend ein Gehäuse und die Batteriezelle (10) nach einem der Ansprüche 1 bis 8, **dadurch gekennzeichnet, dass** die Batteriezelle (10) im Gehäuse angeordnet ist.

10. Elektronische Vorrichtung, **dadurch gekennzeichnet, dass** die elektronische Vorrichtung die Batterie nach Anspruch 9 umfasst.

## Revendications

1. Une cellule de batterie (10), comprenant :
un ensemble d'électrodes (11) comprenant une première surface, des faces latérales et une deuxième surface connectées en série dans une direction d'épaisseur de l'ensemble d'électrodes (11), la première surface étant disposée à l'opposé de la deuxième surface ;
un onglet (12) connecté électriquement à l'ensemble d'électrodes (11) et amené hors d'une des faces latérales ;
un conducteur de liaison d'onglet (13) connecté à l'onglet (12) par soudage pour former une région de soudure (16) ;
une couche adhésive (14), une extrémité de la couche adhésive (14) est disposée sur la première surface, l'autre extrémité de la couche adhésive (14) est disposée sur la deuxième surface, et la couche adhésive (14) recouvre entièrement la région de soudure (16) ;
dans lequel l'onglet (12) comprend un premier onglet et un deuxième onglet, le conducteur de liaison d'onglet (13) comprend un premier conducteur de liaison d'onglet (131) et un deuxième conducteur de liaison d'onglet (132), le premier conducteur de liaison d'onglet (131) est connecté au premier onglet par soudage pour former une première région de soudure, le deuxième conducteur de liaison d'onglet (132) est connecté au deuxième onglet par soudage pour former une deuxième région de soudure, et la couche adhésive (14) comprend une première couche adhésive (141) configurée pour recouvrir la première région de soudure et une deuxième couche adhésive configurée pour recouvrir la deuxième région de soudure ;
dans lequel une encoche (14e) est disposée sur la première couche adhésive (141) et la deuxième couche adhésive (142) séparément pour permettre l'amenée du premier conducteur de liaison d'onglet (131) et du deuxième conducteur de liaison d'onglet (132) ;
**caractérisée en ce que**, la première couche adhésive (141) comprend une première partie (141a), une deuxième partie (141b), une troisième partie (141c) et une quatrième partie (141d) connectées en série, la première partie (141a) est disposée sur la première surface, tant la deuxième partie (141b) que la troisième partie (141c) sont disposées alignées avec la face latérale à partir de laquelle l'onglet est amené, la quatrième partie (141d) est disposée sur la deuxième surface, la deuxième partie (141b) est configurée pour recouvrir la première région de soudure, et l'encoche (14e) est disposée dans la troisième partie (141c),
dans lequel, dans une direction z de la première couche adhésive (141), l'encoche (14e) est bordée des deux côtés par la troisième partie (141c), dans lequel la direction z est perpendiculaire à la direction d'épaisseur et parallèle au plan de la surface latérale à partir de laquelle l'onglet est amené.

2. La cellule de batterie (10) selon la revendication 1, **caractérisée en ce qu'**une largeur du premier conducteur de liaison d'onglet (131) est W0, une largeur de l'encoche (14e) est W1, et 2 mm ≤ W1 - W0 ≤ 6 mm.

3. La cellule de batterie (10) selon la revendication 1 ou 2, **caractérisée en ce qu'**une longueur de la deuxième partie (141b) est supérieure à une longueur de la première région de soudure, et dans la direction d'épaisseur de l'ensemble d'électrodes (11), une largeur de la deuxième partie (141b) est supérieure à une hauteur de la première région de soudure.

4. La cellule de batterie (10) selon l'une quelconque des revendications 1 à 3, **caractérisée en ce que** l'encoche (14e) est disposée dans la quatrième partie (141d).

5. La cellule de batterie (10) selon l'une quelconque des revendications 1 à 4, **caractérisée en ce que** la première couche adhésive (141) et la deuxième couche adhésive (142) sont connectées comme un tout ; ou la première couche adhésive (141) ne se chevauche pas avec la deuxième couche adhésive (142).

6. La cellule de batterie (10) selon l'une quelconque des revendications 1 à 5, **caractérisée en ce qu'**une épaisseur de la couche adhésive est de 0,01 mm-0,05 mm.

7. La cellule de batterie (10) selon l'une quelconque des revendications 1 à 6, **caractérisée en ce que** 2 mm ≤ W3 ≤ D3 - k2, W3 est une largeur d'une portion de la deuxième couche adhésive (142) située entre le premier conducteur de liaison d'onglet (131) et le deuxième conducteur de liaison d'onglet (132), D3 est une distance entre le premier conducteur de liaison d'onglet (131) et le deuxième conducteur de liaison d'onglet (132), k2 est de 2 mm - 4 mm.

8. La cellule de batterie (10) selon l'une quelconque des revendications 1 à 6, **caractérisée en ce que** D3 > (W2+W3), D3 est une distance entre le premier conducteur de liaison d'onglet (131) et le deuxième conducteur de liaison d'onglet (132), W2 est une largeur d'une portion de la première couche adhésive (141) située entre le premier conducteur de liaison d'onglet (131) et le deuxième conducteur de liaison d'onglet (132), W3 est une largeur d'une portion de la deuxième couche adhésive (142) située entre le premier conducteur de liaison d'onglet (131) et le deuxième conducteur de liaison d'onglet (132).

9. Une batterie, comprenant un boîtier et la cellule de batterie (10) selon l'une quelconque des revendications 1 à 8, **caractérisée en ce que** la cellule de batterie (10) est disposée dans le boîtier.

10. Un dispositif électrique, **caractérisé en ce que** le dispositif électrique comprend la batterie selon la revendication 9.
